# EUROPEAN PATENT APPLICATION

(11) **EP 4 644 286 A1**
(43) Date of publication of application: **05.11.2025**
(21) Application number: 24797366.2
(22) Date of filing: 22.04.2024
(51) Int. Cl.: B65D 81/05, B65D 71/70, B65D 25/04, B65D 25/10, B65D 1/36, H01M 50/204

(54) **BATTERY TRANSFER TRAY**

(30) Priority: 27.04.2023 KR 20230055500; 16.04.2024 KR 20240050947
(71) Applicant: LG Energy Solution, Ltd., Seoul 07335 (KR)
(72) Inventor: SEO, In Jae, Daejeon 34122 (KR)
(74) Representative: Goddar, Heinz J.
(86) International application number: PCT/KR2024/005423
(87) International publication number: WO 2024/225710

(57) **Abstract**

The present invention relates to a battery transfer tray, particularly, the present invention provides a battery transfer tray including: an outer frame provided to accommodate a plurality of batteries; a support part protruding from a bottom surface of the outer frame and configured to provide a stepped portion with respect to the bottom surface of the outer frame; and an inclination unit comprising a first inclined part and a second inclined part and provided to buffer an impact due to collision between a roller conveyor and a roller when the roller conveyor moves, wherein the first inclined part is an inclined surface defined between a bottom surface of the outer frame and an end of the support part, and the second inclined part is an inclined surface that is inclined in a direction away from the first inclined part.

## Description

### TECHNICAL FIELD

### CROSS-REFERENCE TO RELATED APPLICATION

The present application claims the benefit of the priority of Korean Patent Application Nos. 10-2023-0055500, filed on April 27, 2023, and 10-2024-0050947, filed on April 16, 2024, which are hereby incorporated by reference in their entirety.

### TECHNICAL FIELD

The present invention relates to a battery transfer tray, and more particularly, to a battery transfer tray that is capable of buffering an impact due to collision when transferred by a roller conveyor.

### BACKGROUND ART

Currently commercialized batteries include nickel cadmium batteries, nickel hydrogen batteries, nickel zinc batteries, lithium batteries, and the like. Among these, the lithium batteries have a little memory effect compared to nickel-based batteries and thus are attracting attention due to free charging and discharging, a low self-discharge rate, and high energy density.

During a process of manufacturing a battery or when transferring a finished product, multiple batteries are accommodated in one tray and then transferred to a subsequent process or delivery location. Here, the tray it is important that the tray stably supports the multiple accommodated batteries to prevent the batteries from being damaged during the transfer.

In particular, when the tray that accommodates the batteries is transferred through a roller conveyor, the rollers of the roller conveyor may be spaced apart from each other. In some case, a front end of the tray may be randomly introduced between the roller and the roller, and thus, collision between the front end of the tray and the roller may occur. When the collision between the tray and the roller occurs, the impact may be transmitted directly to the battery accommodated in the tray to cause damage such as folding, wrinkles, or tearing of the battery, resulting in a poor outer appearance.

### DISCLOSURE OF THE INVENTION

### TECHNICAL PROBLEM

The present invention has been invented to solve the above problems, and the present invention provides a battery transfer tray in which, when a tray accommodating batteries is transferred through a roller conveyor, even if collision between the tray and the roller occurs, an impact due to the collision is buffered to reduce damage of the battery due to the collision.

### TECHNICAL SOLUTION

According to a first embodiment of the present invention, the present invention provides a battery transfer tray including: an outer frame provided to accommodate a plurality of batteries; a support part protruding from a bottom surface of the outer frame and configured to provide a stepped portion with respect to the bottom surface of the outer frame; and an inclination unit comprising a first inclined part and a second inclined part and provided to buffer an impact due to collision between a roller conveyor and a roller when the roller conveyor moves, wherein the first inclined part is an inclined surface defined between a bottom surface of the outer frame and an end of the support part, and the second inclined part is an inclined surface that is inclined in a direction away from the first inclined part.

In addition, an inner frame configured to align the plurality of batteries may be mounted on the outer frame.

In addition, the first inclined part may be disposed at an angle of 10° to 30° with respect to the bottom surface of the outer frame.

In addition, the second inclined part may be disposed to be longer in both directions of the first inclined part than a width of the first inclined part.

In addition, the second inclined part may be provided in a flat shape.

In addition, the inclination unit may be provided in plurality along an edge of the support part.

In addition, the outer frame may include: a mounting part provided so that the inner frame is mounted; a sidewall part disposed to be perpendicular to the mounting part at each of both sides of the mounting part; and a boundary part having an edge on an upper end of the sidewall part to correspond to an edge of the mounting part along the edge of the mounting part.

In addition, a top surface of the boundary part may be flat.

In addition, a stacking groove may be defined in the top surface of the boundary part at a position corresponding to the inclination unit so that a plurality of battery transfer trays are stacked.

In addition, the stacking groove may be provided so that the inclination unit of the battery transfer tray disposed on an upper layer when the plurality of battery transfer trays are stacked is inserted.

In addition, a plurality of heat dissipation holes communicating with the outside to cool the battery may be defined in the mounting part.

In addition, a mounting groove passing through the mounting part so that the inner frame is mounted on the mounting part through a coupling unit may be defined in the mounting part.

In addition, the mounting hole may be defined parallel to one edge of the mounting part to guide a position of the inner frame.

In addition, the mounting part may have gradations disposed parallel to one edge of the mounting part to measure the position of the inner frame.

### ADVANTAGEOUS EFFECTS

The present invention may provide the battery transfer tray in which, when the tray accommodating the batteries is transferred through the roller conveyor, even if the collision between the tray and the roller occurs, the impact due to the collision is buffered to prevent the battery from being damaged due to the collision.

In addition, the stably stacked structure between the plurality of battery transfer trays may be provided.

### BRIEF DESCRIPTION OF THE DRAWINGS

FIG. 1 is a perspective view illustrating a state in which a battery transfer tray and an inner frame are separated from each other according to a first embodiment of the present invention.
FIG. 2 is a plan view illustrating a state in which a battery transfer tray and an inner frame are separated from each other according to a second embodiment of the present invention.
FIG. 3 is an enlarged view illustrating a portion A of FIG. 1.
FIG. 4 is an enlarged view illustrating a portion B of FIG. 1.
FIG. 5 is a perspective view illustrating a state when the battery transfer tray is viewed from below according to the first embodiment of the present invention.
FIG. 6 is an enlarged view illustrating a potion C of FIG. 5 according to the first embodiment of the present invention.

### MODE FOR CARRYING OUT THE INVENTION

Hereinafter, it will be described about an exemplary embodiment of the present invention in conjunction with the accompanying drawings. However, following drawings are intended to facilitate understanding of the present invention, and are only one embodiment of the present invention, and the scope of the present invention is not limited to the range described in the drawings. In addition, in the following drawings, the same symbols refer to the same components, and some components may be exaggerated, reduced, or omitted for easier understanding of the invention.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### First Embodiment

A battery transfer tray 10 may accommodate a plurality of batteries in an internal space thereof, and the battery transfer tray 10 accommodating the batteries may be transferred by a user or through a conveyor.

The battery transfer tray 10 may align and accommodate the plurality of batteries, which are provided in the form of finished products after the battery manufacturing process has been completed in the internal space, transfer the accommodated batteries at once, and allow the accommodated batteries to be repeatedly charged and discharged in an activation process in which the batteries are activated.

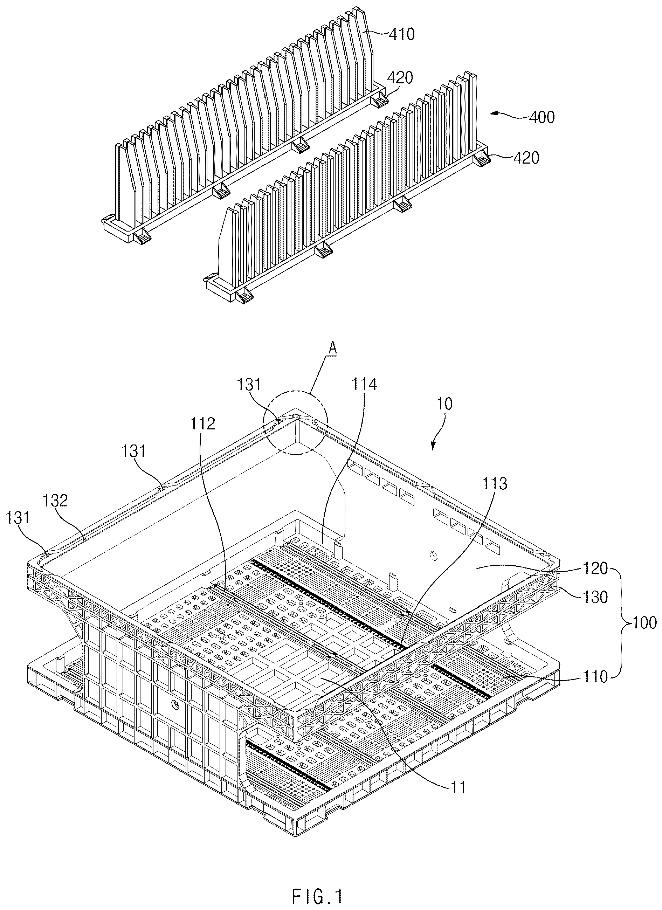

Referring to FIG. 1, in a first embodiment of the present invention, the battery transfer tray 10 of the present invention may include an outer frame 100, a support part 200, and an inclination unit 300.

The outer frame 100 may be disposed at an upper end of the support part 200 and may define an overall outer appearance of the battery transfer tray 10.

The outer frame 100 may define an empty space in the internal space surrounded by the outer frame 100.

The outer frame 100 may have a plurality of rib structures on an outer surface thereof to prevent shape of the outer frame 100 from being deformed due to a temperature changes, a physical impact, etc. The outer frame 100 may improve mechanical strength thereof through the rib structure, improve convenience of the transfer and accommodation by reducing a weight, etc., and reduce manufacturing costs.

The outer frame 100 may be made of an electrically insulating material so as not to electrically affect the process of charging and discharging the batteries accommodated in the internal space. The present invention is not limited thereto, but may include, for example, polymer and rubber materials.

The outer frame 100 may be provided as a whole into a hexahedral shape, and an opening may be defined in one or more surfaces thereof. An inner frame 400 and the batteries may be introduced into the internal space of the outer frame 100 through the opening of the outer frame 100.

The outer frame 100 may include a mounting part 110, a sidewall part 120, and a boundary part 130.

The mounting part 110 may define a bottom surface of the outer frame 100, and the inner frame 400 introduced into the inner space of the outer frame 100 may be mounted through a coupling unit (not shown).

The mounting part 110 may be provided in a rectangular plate shape, and a plurality of heat dissipation holes 111 having various sizes may be defined in the mounting part 110.

The heat dissipation hole 111 may allow a liquid and gas, which are discharged from the batteries introduced into the internal space of the outer frame 100 in the activation process, to be discharged to the outside. In addition, when the batteries are repeatedly charged and discharged to generate heat, the heat dissipation hole 111 may cool the batteries.

The heat dissipation holes 111 may be disposed symmetrically from a center line crossing a center of the mounting part 110 and may include various types of heat dissipation holes 111 defined in various sizes and shapes. Since the heat dissipation holes 111 having the same size are disposed on a specific area of the mounting part 110, the user may determinate a position, at which the inner frame 400 is mounted on the mounting part 110, through the size of the heat dissipation hole 111 disposed around the inner frame 400 mounted on the mounting part 110. Since the plurality of inner frames 400 are symmetrically disposed, it is possible to easily check whether the plurality of inner frames 400 are symmetrically disposed through the size and arrangement of the heat dissipation holes 111 around the inner frame 400.

The mounting hole 112 may be a through-hole defined in the mounting part 110 so that the inner frame 400 is mounted on the mounting part 110.

The mounting hole 112 may be provided in the form of a slot hole defined parallel to one edge of the mounting part 110 so that the inner frame 400 moves on the mounting part 110 to guide the fully mounted position.

The mounting hole 112 may be defined to have a width that is sufficient to insert bolts, screws, etc. of the coupling unit and a length extending along one edge of the mounting part 110.

The plurality of mounting holes 112 may also be defined symmetrically with respect to the center line so that the plurality of inner frames 400 are disposed symmetrically with respect to the center line crossing the center of the mounting part 110.

In addition, the plurality of mounting holes 112 may be defined at predetermined intervals along a longitudinal direction of the center line crossing the center of the mounting part 110 so that the inner frame 400 is strongly mounted on the mounting part 110.

A gradation part 113 may be disposed on the mounting part 110 from one end to the other end of the mounting part 110 along the longitudinal direction of the mounting hole 112.

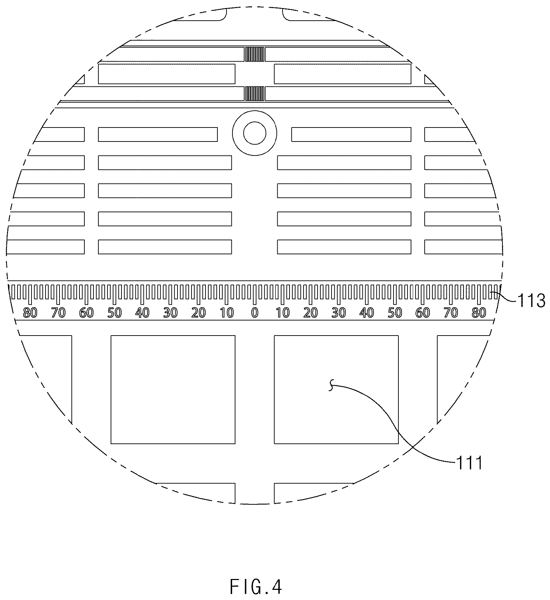

Referring to FIG. 4, the gradation part 113 may display a position of the center line as '0' based on the center line crossing the center of the mounting part 110, and gradations may be displayed at predetermined intervals in both directions perpendicular to the center line. The gradation part 113 may be provided so that the numbers indicating positions of the gradations gradually increase in both the directions based on '0'.

The gradation part 113 may numerically shows accurate positions of the plurality of inner frames 400 so that the plurality of inner frames mounted on the mounting part 110 are mounted at the accurate positions. The user may determine the accurate position of each of the inner frames 400 by measuring a position of a lower end of the inner frame 400 with the gradation of the gradation part 113.

The gradation part 113 may be provided so that the numbers indicating the positions of the gradations gradually increase in both the directions based on '0', and thus, the plurality of inner frames 400 may be guided to be mounted at accurately symmetrical positions on the mounting part 110.

The gradation part 113 may be provided in plurality on the mounting part 110. The plurality of gradation parts 113 may be disposed to be spaced a predetermined distance from each other. Since the longitudinal direction of the plurality of inner frames 400 is disposed in a direction perpendicular to the longitudinal direction of the mounting hole 112, if there is only one gradation part 113, even if the arrangement direction of the inner frames 400 is dislocated, it may be difficult to see that the arrangement of the inner frame 400 is dislocated with only one gradation 113, and thus, the plurality of gradation parts 113 may be disposed to prevent the arrangement direction of the inner frame from being dislocated.

A separation prevention protrusion 114 that is higher than an inner top surface may be disposed on the edge of the mounting part 110.

The separation prevention protrusion 114 may prevent a portion of the batteries accommodated in the battery transfer tray 10 from being separated from an area of the tray 10 when a portion of the batteries is separated, or the mounting of the mounted inner frame 400 is released.

The separation prevention protrusion 114 may be disposed along the rectangular edge of the mounting part 110.

A plurality of rib structures may be disposed on an outer surface of the separation prevention protrusion 114 to improve mechanical strength of the separation prevention protrusion 114, thereby preventing the rectangular shape of the mounting part 110 from being deformed by heat, a temperature, a physical impact, etc.

The sidewall part 120 may be a wall disposed at each of both sides of the mounting part 110 in an upward direction perpendicular to the top surface of the mounting part 110. The sidewall part 120 may be disposed at each of one side and the other end of the mounting part 110, and more specifically, may be disposed in the upward direction perpendicular to the top surface of the separation prevention protrusion 114 disposed at each of one side and the other end of the mounting part 110.

The sidewall part 120 may expand a volume of the internal space of the battery transfer tray 10 in a height direction by provided a vertical wall having a predetermined height and may allow the batteries to be supported and accommodated in the inner frame 400.

A plurality of rib structures may be disposed on an outer surface of the sidewall 120 to improve mechanical strength of the sidewall 120, thereby preventing the shape of the sidewall 120 from being deformed by heat, a temperature, a physical impact, etc.

The boundary part 130 may be disposed on an upper end of the sidewall part 120 so that at least a portion thereof is connected to an upper end of the sidewall part 120, and an edge corresponding to the edge of the mounting part 110 is disposed along the edge of the mounting part 110. Since the boundary part 130 is disposed along the edge of the mounting part 110, the boundary part 130 may be provided in a rectangular ring structure, and an inner surface of the boundary part 130 may define an opening of the battery transfer tray 10.

In addition, the area of the mounting part 110 on which the sidewall part 120 is not disposed may be spaced apart from the boundary part 130 by a distance corresponding to the height of the sidewall part 120, and the opening may be defined in the space defined by spacing the mounting part 110 and the boundary part 130 apart from each other. The battery transfer tray 10 may have an opening defined through the inner surface of the boundary part 130, and the opening may be defined in a space spaced apart between the boundary part 130 and the mounting part 110.

The boundary part 130 may be disposed on the upper end of the sidewall part 120 to define the internal space of the battery transfer tray 10. The battery transfer tray 10 may be provided in an overall hexahedral shape through the mounting part 110, the sidewall part 120, and the boundary part 130.

An area of the boundary part 130, which directly faces the mounting part 110, may be spaced a predetermined distance from the sidewall part 120, and the area may function as a handle so that the user directly holds and carry the battery.

A plurality of rib structures may be disposed on an outer surface of the boundary part 130 to improve mechanical strength of the boundary part 130, thereby preventing the shape of the boundary part 130 from being deformed by heat, a temperature, a physical impact, etc. In particular, when the user holds the boundary part 130 to carry the battery transfer tray 10, the boundary part 130 may include the plurality of rib structures on the outer surface thereof so that the boundary part 130 is configured to support the battery transfer tray 10 and weights of the batteries accommodated in the battery transfer tray 10 on area of the boundary part 130, which is held by the user. The rib structures disposed on the boundary part 130 may include not only horizontal and vertical lattice-shaped rib structures disposed on the sidewall part 120 and the mounting part 110, but also 'X'-shaped rib structures. Thus, the mechanical strength of the boundary part 130 may be stronger than that of each of the sidewall part 120 and the mounting part 110.

A top surface of the boundary part 130 may be provided in a flat shape, and the plurality of battery transfer trays 10 may be stacked. In the plurality of stacked battery transfer trays 10, the top surface of the boundary part 130 of the battery transfer tray 10 disposed on a lower layer may be in contact with a bottom surface of the battery transfer tray 10 disposed on an upper layer.

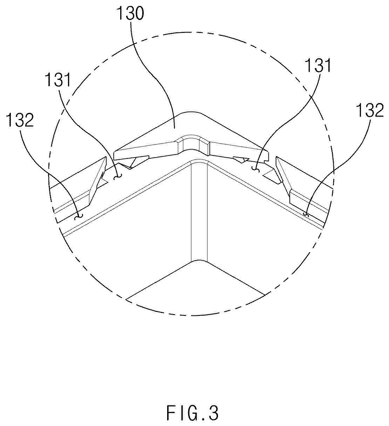

Referring to FIG. 3, a stacking groove 131 may be defined in the top surface of the boundary part 130 at a position corresponding to the position of the inclination unit 300 so that the plurality of battery transfer trays 10 are stacked.

Since the inclination unit 300 is disposed to protrude from the bottom surface of the battery transfer tray 10, when the battery transfer trays 10 are stacked, an unstable stacked structure may be provided by the protruding inclination unit 300. Thus, the stacking groove 131 may be defined in the top surface of the boundary part 130 so that the inclination unit 300 of the battery transfer tray 10 disposed on the upper layer is inserted into the stacking groove 131 to provide the stably stacked structure.

In addition, since the inclination unit 300 of the battery transfer tray 10 disposed on the upper layer is inserted into the stacking groove 131 of the battery transfer tray 10 disposed on the lower layer, the position of the battery transfer tray 10 disposed on the upper layer may be stably fixed, and when the stacked battery transfer trays 10 are transferred through the roller conveyor, the stacked structure may be stably maintained even when shaken due to collision, etc.

The stacking groove 131 may be defined in the top surface of the boundary part 130 to correspond to the position of the inclination unit 300 and may be provided in a number corresponding to the number of inclination units 300.

The shape of the stacking groove 131 is not limited thereto, but may be provided in, for example, shapes such as a shape corresponding to the shape of the inclination unit 300, a shape provided at a predetermined height to correspond to the shape of the widest cross-section of the inclination unit 300, and a shape having a larger volume than that of the inclination unit 300 so that the inclination unit 300 is fully inserted.

A hook groove 132 may be defined in the top surface of the boundary part 130 at a certain depth along an inner edge of the top surface of the boundary part 130. When the plurality of battery transfer trays 10 are stacked, the hook groove 132 may be inserted into the support part 200 of the tray 10 disposed on the upper layer to ensure that the stacked structure is maintained stably.

Since the hook groove 132 is defined along the inner edge of the top surface of the boundary part 130, an edge of the support part 200 of the tray 10 disposed on the upper layer may be introduced may be inserted inside the edge of the hook groove 132. When the support part 200 is inserted into the hook groove 132, the inner surface of the hook groove 132 and the outer surface of the support part 200 may be in contact with each other.

The plurality of stacking grooves 131 may be disposed at predetermined intervals along a longitudinal direction of the hook groove 132. A depth of the stacking groove 131 may be provided to be the same as a depth of the hook groove 132.

The support part 200 may support the outer frame 100 at a lower portion of the outer frame 100. The support part 200 may have a shape that protrudes from a bottom surface of the outer frame 100. The support part 200 may have a stepped portion with respect to the bottom surface of the outer frame 100. Specifically, the support part 200 may be disposed on the bottom surface of the outer frame 100 to provide the stepped portion in an inward direction of the outer frame 100.

More specifically, the support part 200 may be disposed to protrude in a direction perpendicular to the bottom surface of the mounting part 110, and the stepped portion may be provided in a stair shape in the inward direction with respect to the edge of the mounting part 110. The stepped portion provided by the support part 200 with respect to the mounting part 110 may allow a lower end of the tray to pass over the colliding roller through the stepped portion even if the lower end of the tray collides with the roller when the battery transfer tray 10 is transferred through the roller conveyor.

A corresponding hole 210 may be defined in the support part 200 in a shape corresponding to the position corresponding to each of the heat dissipation hole 111 and the mounting hole 112 defined in the mounting part 110 or a shape larger than the size of each of the heat dissipation hole 111 and the mounting hole 112. The corresponding hole 210 may guide the liquid and gas, which are discharged from the batteries introduced into the internal space of the outer frame 100 in the activation process, so that the liquid and gas are discharged to the outside of the tray 10, and when the batteries are repeatedly charged and discharged to generate heat, the batteries may be cooled.

In addition, since the corresponding hole 210 defined at the position corresponding to the position of the mounting hole 112 is provided to be larger than that of the mounting hole 112, the coupling unit such as a bolt head or a nut may be inserted, and the coupling unit may pass through the mounting hole 112 to couple the mounting part 110 to the inner frame 400.

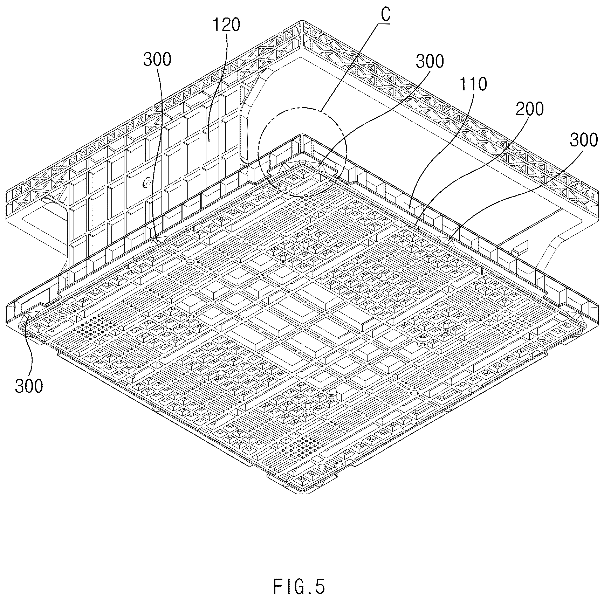

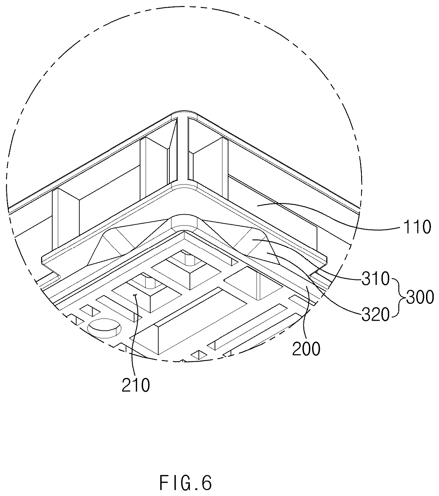

Referring to FIGS. 5 and 6, the inclination unit 300 may be an inclined surface defined on the stepped portion between the bottom surface of the outer frame 100 and the outer surface of the support part 200, and when the battery transfer tray 10 is transferred on the roller conveyor, if the collision occurs between the roller and the lower end of the tray 10, the inclination unit 300 and the roller may be in contact with each other to disperse and buffer the impact caused by the collision, and the tray 10 may move to pass over the colliding roller through an inclined surface of the inclination unit 300.

The inclination unit 300 may be provided in plurality on each stepped portion between the outer surface of each of the support parts 200 and the bottom surface of the outer frame 100. Alternatively, the inclination unit 300 may be provided in plurality along the edge of the support part 200. Thus, even if there is a change in transfer direction while the battery transfer tray 10 is being transferred to the roller conveyor, the collision with the roller may be buffered in all directions.

The inclination unit 300 may include a first inclined part 310 and a second inclined part 320. Thus, the inclination unit 300 may be provided to buffer the impact caused by the collision with the roller in various directions when the roller conveyor moves.

The first inclined part 310 may be an inclined surface defined between the bottom surface of the outer frame 100 and the end of the support part 200. Here, the end of the support part 200 may mean the vicinity of an edge of a lower end of the outer surface of the support part 200.

The first inclined part 310 may most effectively buffer the impact when the outer surface of the support part 200 of the battery transfer tray 10 and the roller head-on collide with each other, and when the outer surface of the support part 200 and the roller are provided at a predetermined angle therebetween to obliquely collide with each other at the predetermined angle, an effect of buffering the impact may be reduced. Thus, the first inclined part 310 may have a curved shape on an outer surface thereof, and thus, even when the outer surface of the support part 200 and the roller are provided at a predetermined angle to obliquely collide with each other at the predetermined angle, the impact may be effectively buffered.

The curved shape provided on the first inclined part 310 may be a shape that is convex upward with respect to the inclined surface and may be disposed to be symmetrical in both directions with respect to a central axis defined along a longitudinal direction of the first inclined part 310.

The curved shape provided on the first inclined part 310 may be provided so that the second inclined part 320 disposed on each of both sides of the first inclined part 310 and the first inclined part 310 are smoothly connected to each other at a boundary between the first inclined part 310 and the second inclined part 320.

An inclined angle of the first inclined part 310 may be provided at an angle of 10° to 30° with respect to the bottom surface of the outer frame 100.

The second inclined part 320 may be disposed at each of both the sides of the first inclined part 310 and may be an inclined surface that is inclined in a direction away from the first inclined part 310. That is, the second inclined part 320 may be disposed in a diagonal direction or a direction perpendicular to the inclined direction of the first inclined part 310. The second inclined part 320 may be disposed to be longer in both directions of the first inclined part 310 than a width of the first inclined part 310. The second inclined part may be provided in a flat shape.

The second inclined part 320 may effectively disperse and buffer the impact when the outer surface of the support part 200 of the battery transfer tray 10 and the roller of the roller conveyor obliquely collide with each other at a predetermined angle and may allow the tray 10 to move to pass over the colliding roller through the second inclined surface 320.

The first inclined part 310 and the second inclined part 320 of the inclination unit 300 may effectively disperse the impact to minimize an impact applied to the batteries accommodated in the battery transfer tray 10 even when the battery transfer tray 10 moves on the roller conveyor and not only when the outer surface of the support part 200 and the roller head-on collide with each other, but also when the outer surface of the support part 200 and the roller obliquely collide with each other at a predetermined angle.

### Second Embodiment

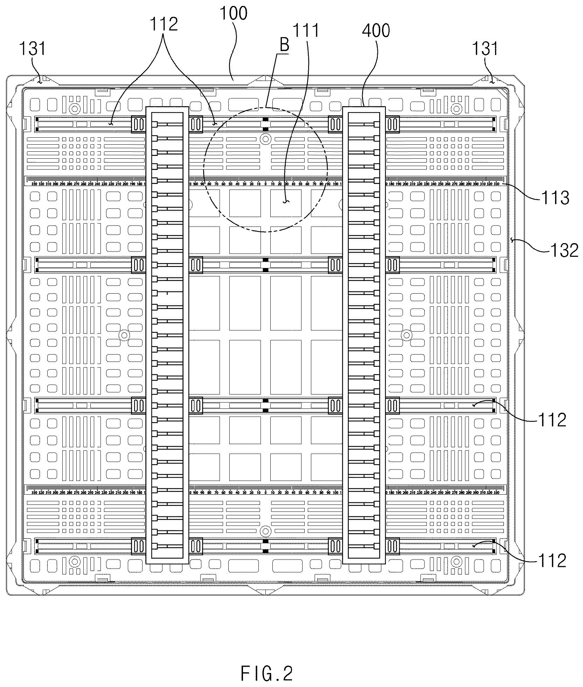

As a second embodiment of the present invention, when described with reference to FIG. 2, an assembly of a battery transfer tray 10 of the present invention may include a battery transfer tray 10 and a plurality of inner frames 400 mounted on the battery transfer tray 10. The battery transfer tray 10 may include an outer frame 100, a support part 200, and an inclination unit 300, and a detailed description thereof may be cited from the contents of the first embodiment described above. The inner frame 400 may be provided so that a plurality of batteries stand to be aligned with each other, and the inner frame 400 may be mounted on a mounting part 110 of the battery transfer tray 10 through a coupling unit.

The inner frame 400 may be provided in plurality, and a plurality of partition plates 410 may be disposed at predetermined intervals along a longitudinal direction of the inner frame 400. The plurality of batteries may be disposed between the partition plate 410 and the adjacent partition plate 410 and may be stably supported to be erected by the partition plates 410. The positions of the plurality of inner frames 400 may be adjusted so that the inner frames 400 are disposed at symmetrical positions on the mounting part 110. The inner frame 400 may be mounted on the mounting part 110 by coupling a coupling unit such as a bolt or nut to a coupling unit 420.

Although the present technology has been described through the above examples, the present technology is not limited thereto. The above embodiments may be modified or changed without departing from the spirit and scope of the present technology, and those skilled in the art will recognize that such modifications and changes also belong to the present technology.

### [Description of the Symbols]

10 : Battery transfer tray
100 : Outer frame
110 : Mounting part
111 : Heat dissipation hole
112 : Mounting hole
113 : Gradation part
114 : Separation prevention protrusion
120 : Sidewall part
130 : Boundary part
131 : Stacking groove
132 : Hook groove
200 : Support part
210 : Corresponding hole
300 : Inclination unit
310 : First inclined part
320 : Second inclined part
400 : Inner frame
410 : Partition plate
420 : Coupling part

## Claims

1. A battery transfer tray comprising:
an outer frame provided to accommodate a plurality of batteries;
a support part protruding from a bottom surface of the outer frame and configured to provide a stepped portion with respect to the bottom surface of the outer frame; and
an inclination unit comprising a first inclined part and a second inclined part and provided to buffer an impact due to collision with a roller when the roller conveyor moves,
wherein the first inclined part is an inclined surface defined between a bottom surface of the outer frame and an end of the support part, and
the second inclined part is an inclined surface that is inclined in a direction away from the first inclined part.

2. The battery transfer tray of claim 1, wherein an inner frame configured to align the plurality of batteries is mounted on the outer frame.

3. The battery transfer tray of claim 1, wherein the first inclined part comprises a curved shape on an outer surface thereof.

4. The battery transfer tray of claim 3, wherein the first inclined part is disposed at an angle of 10° to 30° with respect to the bottom surface of the outer frame.

5. The battery transfer tray of claim 1, wherein the second inclined part is disposed to be longer in both directions of the first inclined part than a width of the first inclined part.

6. The battery transfer tray of claim 1, wherein the second inclined part is provided in a flat shape.

7. The battery transfer tray of claim 1, wherein the inclination unit is provided in plurality along an edge of the support part.

8. The battery transfer tray of claim 1, wherein the outer frame comprises:
a mounting part provided so that the inner frame is mounted;
a sidewall part disposed to be perpendicular to the mounting part at each of both sides of the mounting part; and
a boundary part having an edge on an upper end of the sidewall part to correspond to an edge of the mounting part along the edge of the mounting part.

9. The battery transfer tray of claim 8, wherein a top surface of the boundary part is flat.

10. The battery transfer tray of claim 9, wherein a stacking groove is defined in the top surface of the boundary part at a position corresponding to the inclination unit so that a plurality of battery transfer trays are stacked.

11. The battery transfer tray of claim 10, wherein the stacking groove is provided so that the inclination unit of the battery transfer tray disposed on an upper layer when the plurality of battery transfer trays are stacked is inserted.

12. The battery transfer tray of claim 8, wherein a plurality of heat dissipation holes communicating with the outside to cool the battery are defined in the mounting part.

13. The battery transfer tray of claim 8, wherein a mounting groove passing through the mounting part so that the inner frame is mounted on the mounting part through a coupling unit is defined in the mounting part.

14. The battery transfer tray of claim 13, wherein the mounting hole is defined parallel to one edge of the mounting part to guide a position of the inner frame.

15. The battery transfer tray of claim 14, wherein the mounting part has gradations disposed parallel to one edge of the mounting part to measure the position of the inner frame.
